# FASCICULE DE BREVET EUROPEEN

(11) **EP 2 814 680 B1**
(45) Date de publication et mention de la délivrance du brevet: **04.10.2017**
(21) Numéro de dépôt: 13703440.1
(22) Date de dépôt: 12.02.2013
(51) Int. Cl.: B60H 1/00, B60H 1/32

(54) **BOUCLE DE CLIMATISATION FONCTIONNANT EN POMPE À CHALEUR À DÉGIVRAGE PAR IMPULSION**
SCHLEIFENFUNKTION EINER KLIMAANLAGE ALS GEPULSTE WÄRMEPUMPE FÜR ELEKTROTHERMISCHE ENTEISUNG
AIR-CONDITIONING LOOP FUNCTIONING AS A PULSE ELECTRO-THERMAL DEICING HEAT PUMP

(30) Priorité: 16.02.2012 FR 1251408
(43) Date de publication de la demande: 24.12.2014
(73) Titulaire: VALEO SYSTEMES THERMIQUES, 78321 Le Mesnil Saint Denis (FR)
(72) Inventeur: LIU, Jin Ming, 78700 Conflans Sainte Honorine (FR)
(74) Mandataire: Metz, Gaëlle
(86) Numéro de dépôt international: PCT/EP2013/052740
(87) Numéro de publication internationale: WO 2013/120828

(56) Documents cités:
- EP-A1- 0 681 933
- EP-A2- 1 000 784
- FR-A1- 2 958 019
- US-A- 5 586 448

## Description

La présente invention concerne le domaine technique des boucles de climatisation à fluide réfrigérant et compresseur utilisées dans les installations de chauffage, ventilation et/ou climatisation d'un flux d'air intérieur destiné à être diffusé dans un habitacle, notamment, d'un véhicule automobile.

Dans le domaine de telles installations de chauffage, ventilation et/ou climatisation, il est connu de mettre en oeuvre un groupe moto-ventilateur qui aspire un flux d'air pour l'insuffler dans un boîtier conditionnement thermique du flux d'air afin de générer le flux d'air intérieur traité thermiquement et dirigé vers l'intérieur de l'habitacle. La principale fonction du boîtier de conditionnement thermique du flux d'air est de conditionner le flux d'air intérieur à une température de consigne déterminée par un utilisateur du véhicule. À cet effet, le boîtier de conditionnement thermique comprend des moyens de chauffage, de déshumidification et/ou de refroidissement du flux d'air intérieur.

Dans le cas d'un véhicule à moteur thermique, de tels moyens sont, le plus généralement, formés, d'une part, par un radiateur raccordé au système de refroidissement du moteur thermique, pour le chauffage du flux d'air intérieur, et, d'autre part, par un évaporateur d'une boucle de climatisation, pour la déshumidification et/ou le refroidissement du flux d'air intérieur.

Dans le cas d'un véhicule hybride ou complètement électrique, il n'est pas possible d'utiliser le circuit de refroidissement d'un moteur thermique en tant que source de chaleur.

Aussi, il a été proposé de mettre en oeuvre une installation de chauffage, ventilation et/ou climatisation adaptée pour avoir un mode de fonctionnement dit "refroidissement" pour assurer la déshumidification et/ou le refroidissement du flux d'air intérieur et un mode de fonctionnement dit "pompe à chaleur" pour assurer le chauffage du flux d'air intérieur, avec un rendement supérieur à celui qui serait obtenu avec un radiateur électrique. Une telle installation de chauffage, ventilation et/ou climatisation est réversible et est donc particulièrement adapté pour un véhicule dont la consommation énergétique doit être maîtrisée. Une telle boucle de climatisation est décrite dans la demande de brevet FR 2 958 019, ou encore dans la demande de brevet FR 2 954 463.

Dans le cas d'un mode de fonctionnement dit "pompe à chaleur", un échangeur de chaleur intérieur est utilisé, en tant que condenseur, pour chauffer directement ou indirectement, via un fluide caloporteur, le flux d'air intérieur, tandis qu'un échangeur de chaleur extérieur est utilisé, en tant qu'évaporateur, pour extraire de la chaleur d'un flux d'air extérieur. Compte tenu de l'humidité du flux d'air extérieur, l'échangeur de chaleur extérieur a tendance à se recouvrir d'une couche de givre de sorte que l'échangeur de chaleur extérieur n'est plus en mesure d'assurer efficacement la fonction d'évaporateur.
Afin de procéder au dégivrage de l'échangeur de chaleur extérieur, il a été proposé d'inverser le mode de fonctionnement de la boucle de climatisation de manière à alimenter l'échangeur de chaleur extérieur en gaz réfrigérant chaud et ainsi le dégivrer.
Cependant, pendant l'inversion du mode de fonctionnement de la boucle de climatisation, l'échangeur de chaleur intérieur n'est plus alimenté en gaz réfrigérant chaud de sorte que le chauffage de l'habitacle n'est plus possible. Or, en période hivernale, un tel arrêt nuit au confort des passagers de l'habitacle du véhicule.

Ainsi, il est apparu le besoin d'un nouveau type de boucle de climatisation qui puisse fonctionner dans un mode de fonctionnement dit "pompe en chaleur" et dont l'échangeur de chaleur extérieur puisse être dégivré sans nuire au confort des passagers de l'habitacle du véhicule.

Afin d'atteindre un tel objectif, la présente invention propose une boucle de climatisation, pour une installation de chauffage, ventilation et/ou climatisation, notamment d'un habitacle de véhicule, dans laquelle circule un fluide réfrigérant et apte à fonctionner au moins un mode de fonctionnement dit "pompe à chaleur" afin de chauffer l'habitacle, comprenant au moins un compresseur comportant une sortie de fluide réfrigérant raccordée à une canalisation de refoulement et une entrée de fluide réfrigérant raccordée à une canalisation d'aspiration, un échangeur de chaleur intérieur, apte à fonctionner au moins en tant que condenseur, raccordé au compresseur par la canalisation de refoulement et une unité extérieure raccordée au compresseur par la canalisation d'aspiration et comprenant au moins un échangeur de chaleur extérieur, apte à fonctionner au moins en tant qu'évaporateur, l'échangeur de chaleur intérieur étant raccordé à l'unité extérieure par une première canalisation intermédiaire comportant au moins un premier organe de détente. Suivant l'invention, la boucle climatisation comprend une canalisation de dégivrage raccordée, d'une part, au compresseur et/ou à la canalisation de refoulement et, d'autre part, à l'unité extérieure, cette canalisation de dégivrage permettant de maintenir l'alimentation de l'échangeur de chaleur intérieur en fluide réfrigérant pendant le dégivrage de l'unité extérieure. L'invention permet, de manière avantageuse, de maintenir l'alimentation de l'échangeur de chaleur intérieur en fluide réfrigérant pendant le dégivrage de l'unité extérieure, de sorte que le chauffage de l'habitacle n'est pas interrompu. Ainsi, le confort de l'habitacle en cours de chauffage n'est pas altéré.
Selon une caractéristique de l'invention, la canalisation de dégivrage comporte un deuxième organe de détente.
De plus, la boucle de climatisation comprend une unité de commande pilotant le premier organe de détente et/ou le deuxième organe de détente, afin de répartir le fluide réfrigérant issu du compresseur entre l'échangeur de chaleur intérieur et l'unité extérieure et/ou à placer l'unité extérieure à une température supérieure à 0°C.

Préférentiellement, la boucle de climatisation comprend des moyens de détection du givre dans l'unité extérieure raccordés à l'unité de commande. Ainsi agencée, l'unité de commande est adaptée pour :
- si la quantité de givre présente dans l'unité extérieure est inférieure à un seuil prédéterminé, agencer la boucle de climatisation dans un mode de fonctionnement dit "pompe à chaleur", dans lequel le deuxième organe de détente est fermé,
- si la quantité de givre présente dans l'unité extérieure est supérieure à un seuil prédéterminé, agencer la boucle de climatisation dans un mode de fonctionnement dit "dégivrage", dans lequel le premier organe de détente et le deuxième organe de détente sont au moins partiellement ouverts.

Selon la présente invention, il est possible de procéder à l'ouverture et à la fermeture du premier organe de détente et/ou du deuxième organe de détente selon des cycles prédéfinis, afin de définir un dégivrage par impulsion, correspondant aux séquences durant lesquelles le fluide réfrigérant circule dans la canalisation de dégivrage.

La présente invention couvre également un procédé de commande d'une telle boucle de climatisation afin de permettre l'ouverture et la fermeture du premier organe de détente et/ou du deuxième organe de détente.

Cette caractéristique de l'invention permet de limiter la durée de fonctionnement dans le mode de fonctionnement dit "dégivrage" au strict nécessaire, de sorte que la durée de la réduction de la puissance calorifique disponible au niveau de l'échangeur de chaleur intérieur est limitée.

Selon une autre caractéristique de l'invention, l'unité de commande est adaptée pour, dans le mode de fonctionnement dit "dégivrage", établir, dans une partie au moins de l'unité extérieure, une pression à une valeur supérieure à la valeur pour laquelle la température du fluide réfrigérant est supérieure à 0°C.

Avantageusement, l'unité extérieure peut être composée d'un ou plusieurs échangeurs de chaleur.

Selon une première forme de réalisation, l'échangeur de chaleur extérieur est un échangeur de chaleur réversible, apte à fonctionner en tant qu'évaporateur ou en tant que condenseur.

Avantageusement, l'échangeur de chaleur extérieur est raccordé à la canalisation intermédiaire et à la canalisation d'aspiration.

De plus, l'unité extérieure comprend un échangeur de chaleur extérieur complémentaire. Préférentiellement, l'échangeur de chaleur extérieur complémentaire est disposé en parallèle avec l'échangeur de chaleur extérieur.

Selon cette alternative, l'échangeur de chaleur extérieur est raccordé à la canalisation de dégivrage et à la canalisation d'aspiration.

Préférentiellement, l'échangeur de chaleur extérieur complémentaire est un échangeur de chaleur réversible, apte à fonctionner en tant qu'évaporateur ou en tant que condenseur.

Alternativement, l'échangeur de chaleur extérieur complémentaire est apte à fonctionner uniquement en condenseur.

Selon un autre exemple de réalisation, l'unité extérieure comprend deux échangeurs de chaleur réversibles, aptes à fonctionner en tant qu'évaporateur ou en tant que condenseur, et disposés en parallèle. Selon cet exemple particulier, un premier échangeur réversible est raccordé à la canalisation de dégivrage et à la canalisation d'aspiration et le deuxième échangeur réversible est raccordé à la canalisation intermédiaire et à la canalisation d'aspiration.

Selon une autre caractéristique de la présente invention, l'unité extérieure comprend une canalisation de dérivation raccordant la canalisation de dégivrage et la première canalisation intermédiaire. Avantageusement, la canalisation de dérivation comporte une vanne, préférentiellement pilotée par l'unité de commande.

Selon une autre forme réalisation de la présente invention, l'unité extérieure comprend un premier échangeur de chaleur extérieur, apte à fonctionner uniquement en tant qu'évaporateur et raccordé à la canalisation intermédiaire et à la canalisation d'aspiration, et, un deuxième échangeur de chaleur extérieur, apte à fonctionner uniquement en tant que condenseur, disposé en parallèle du premier échangeur de chaleur extérieur, et raccordé à la canalisation de dégivrage et à la canalisation d'aspiration.

Selon une caractéristique additionnelle de la présente invention, l'unité extérieure est adaptée pour être traversée par un flux d'air extérieur. Préférentiellement, le flux d'air extérieur circule à travers l'échangeur de chaleur extérieur complémentaire, fonctionnant en tant que condenseur, avant de traverser l'échangeur de chaleur extérieur. Un tel mode de fonctionnement de l'unité extérieure permet au flux d'air extérieur d'être réchauffé par l'échangeur de chaleur extérieur complémentaire, fonctionnant en tant que condenseur, de manière à faire fondre le givre présent sur l'échangeur de chaleur extérieur.

Selon une caractéristique de l'invention, la boucle de climatisation comprend, en aval de l'unité extérieure, un accumulateur de fluide réfrigérant raccordé à la canalisation d'aspiration.

Avantageusement, le compresseur est un compresseur à débit variable. De même, préférentiellement, le premier organe de détente, respectivement le deuxième organe de détente, est à pression et à débit variables, piloté par l'unité de commande.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- La figure 1 est une vue schématique d'un boîtier de conditionnement thermique d'un flux d'air intérieur d'un habitacle de véhicule,
- La figure 2 est une vue schématique de principe d'une boucle de climatisation selon une première variante de réalisation de la présente invention,
- La figure 3 est une vue schématique de principe d'une boucle de climatisation selon une deuxième variante de réalisation de la présente invention,
- La figure 4 est une vue schématique de principe d'une boucle de climatisation selon une troisième variante de réalisation de la présente invention, et
- La figure 5 est une vue schématique de principe d'une boucle de climatisation selon une quatrième variante de réalisation de la présente invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

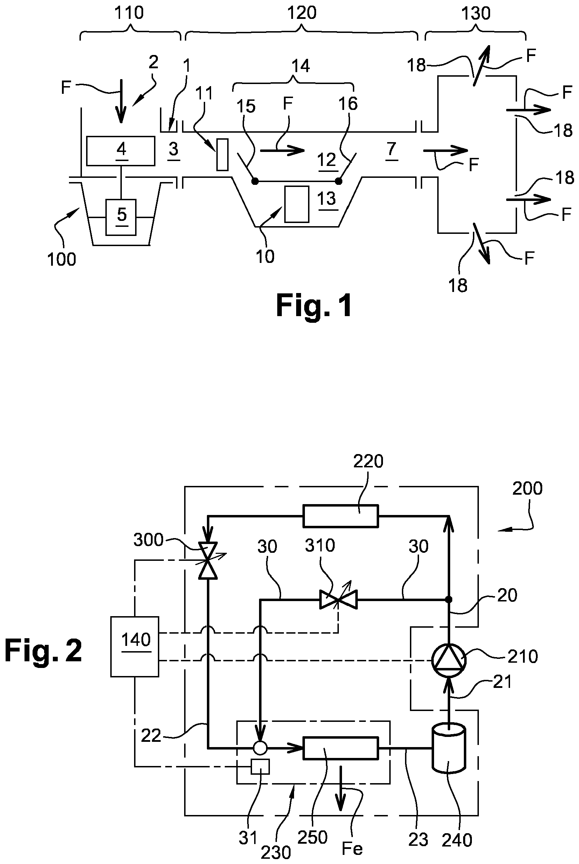

La figure 1 est une vue schématique d'un boîtier de conditionnement thermique 100 pour le traitement thermique d'un flux d'air intérieur destiné à être diffusé dans un habitacle d'un véhicule. Le boîtier de conditionnement thermique 100 comprend, dans le sens de circulation du flux d'air intérieur, indiqué par les flèches F, une unité de ventilation 110, une unité de traitement thermique 120 et une unité de distribution 130.

Selon l'exemple de réalisation de la figure 1, l'unité de ventilation 110 comprend un caisson de ventilation 1 comportant au moins une entrée d'air 2 et au moins une sortie d'air 3. Le caisson de ventilation 1 comporte une turbine 4, entraînée en rotation par un moteur électrique 5, pour la mise en circulation du flux d'air intérieur dans le boîtier de conditionnement thermique 100.

La sortie d'air 3 de l'unité ventilation 110 est raccordée à une entrée de l'unité de traitement thermique 120. Par ailleurs, l'unité de traitement thermique 120 comprend une sortie d'air traité 7 raccordée à une entrée de l'unité de distribution 130.

Afin d'assurer la fonction de chauffage, l'unité de traitement thermique 120 comporte au moins un moyen de chauffage 10. Selon la présente invention, le moyen de chauffage 10 est constitué par un échangeur de chaleur intérieur 220 , en particulier un condenseur 220, agencé dans une boucle de climatisation 200, représentée aux figures 2 à 5. Bien entendu, les moyens de chauffage 10 pourraient également comprendre un élément de chauffage électrique.

L'unité de traitement thermique 120 comprend également au moins un moyen de refroidissement 11. Selon la présente invention, le moyen de refroidissement 11 est constitué par un évaporateur agencé dans la boucle de climatisation 200.

L'unité de traitement thermique 120 comprend encore des canaux de circulation 12 et 13 du flux d'air intérieur, dont l'ouverture et la fermeture sont commandées par au moins un moyen de mixage 14, en particulier réalisé sous la forme de deux volets 15 et 16. Le moyen de mixage 14 est commandé en fonction du traitement thermique du flux d'air intérieur désiré.

Avantageusement, un premier canal de circulation 12, dit "canal d'air froid", est un canal permettant la circulation du flux d'air intérieur issu directement du moyen de refroidissement 11, sans être chauffé. Un deuxième canal de circulation 13, dit "canal d'air chaud", est un canal permettant la circulation du flux d'air intérieur, issu du moyen de refroidissement 11, à travers le moyen de chauffage 10 afin d'y être réchauffé.

Par suite, le premier canal de circulation 12 et le deuxième canal de circulation 13 sont regroupés afin de définir le flux d'air intérieur à température désirée destiné à être diffusé dans l'habitacle du véhicule.

En sortie de l'unité de traitement thermique 120, est agencée l'unité de distribution 130 comprenant au moins une sortie d'air 18, destinée à alimenter différentes bouches de diffusion d'air de l'habitacle du véhicule. La sortie d'air 18 est associée à au moins un volet de distribution, non représenté, piloté en fonction des commandes de l'utilisateur du véhicule. Avantageusement, l'unité de distribution 130 comprend plusieurs sorties d'air 18.

Le mode de réalisation d'un tel boîtier de conditionnement thermique 100 est bien connu de l'homme du métier et ne nécessite donc pas ici de plus amples explications.

L'invention se rapporte plus particulièrement à la boucle de climatisation 200, dont une première variante de réalisation selon la présente invention est présentée à la figure 2 dans une vue schématique de principe.

Selon la présente invention, les termes "aval", "amont" et "parallèle" qualifient la position d'un composant par rapport à un autre, selon le sens de circulation de fluide réfrigérant dans la boucle de climatisation 200.

De plus, selon la présente invention, les termes "ouvert" et "fermé" qualifient l'état d'une vanne permettant, respectivement, d'autoriser et/ou de bloquer un passage de fluide réfrigérant.

La boucle de climatisation 200 comprend un compresseur 210 assurant la circulation et la compression d'un fluide réfrigérant circulant dans la boucle de climatisation 200. Le compresseur 210 est avantageusement piloté par une unité de commande 140.

Le fluide réfrigérant circulant dans la boucle de climatisation 200 peut être de toute nature appropriée. Par exemple, le fluide réfrigérant peut être un fluide super-critique, tel que du dioxyde de carbone connu sous la dénomination R744. Néanmoins, le fluide réfrigérant peut être un fluide sous-critique, tel que qu'un hydrofluorocarbone, par exemple le fluide réfrigérant connu sous la dénomination R134a, ou un fluide réfrigérant à faible impact environnemental, par exemple le fluide réfrigérant connu sous la dénomination R1234yf, ou encore un hydrocarbure halogéné ou un mélange d'hydrocarbures halogénés.

Le compresseur 210 est raccordé, en aval du compresseur 210, à une canalisation de refoulement 20 et, en amont, à une canalisation d'aspiration 21.

En aval du compresseur 210, la boucle de climatisation 200 comprend, dans le sens de circulation du fluide réfrigérant, l'échangeur de chaleur intérieur 220, une unité extérieure 230, et un réservoir ou accumulateur de fluide réfrigérant 240.

L'échangeur de chaleur intérieur 220 est, d'une part, raccordé à la canalisation de refoulement 20 et, d'autre part, à une première canalisation intermédiaire 22. De plus, la première canalisation intermédiaire 22 relie l'échangeur de chaleur intérieur 220 à l'unité extérieure 230. La canalisation intermédiaire est commandée par un premier organe de détente 300. Avantageusement, le premier organe de détente 300 est à pression et débit variables et est piloté par l'unité de commande 140. De plus, alternativement ou en complément, le premier organe de détente 300 peut également comporter un moyen de fermeture, permettant d'interdire la circulation de fluide réfrigérant. Préférentiellement, le premier organe de détente 300 est un détendeur, par exemple un détendeur thermostatique ou électronique.

L'unité extérieure 230 est raccordée à l'accumulateur de fluide réfrigérant 240 par une deuxième canalisation intermédiaire 23. Enfin, l'accumulateur de fluide réfrigérant 240 est raccordé au compresseur 210 par la canalisation d'aspiration 21.

De façon complémentaire ou alternative, un évaporateur, notamment constituant le moyen de refroidissement 11 du boîtier de conditionnement thermique 100, et un organe de détente complémentaire, peuvent être disposés en aval de l'unité extérieure 230 et en amont du compresseur 210. Un tel évaporateur peut être agencé hors de l'unité extérieure 230 ou dans l'unité extérieure 230. Il peut également être disposé en aval du point de jonction entre la deuxième canalisation intermédiaire 23 et une canalisation de dégivrage 30, dont la fonction et l'agencement seront décrits ci-après.

L'échangeur de chaleur intérieur 220 est adapté pour fonctionner au moins en tant que condenseur lorsque la boucle de climatisation 200 fonctionne dans le mode de fonctionnement dit "pompe à chaleur", de manière à assurer le chauffage du flux d'air intérieur, préalablement à la diffusion dans l'habitacle du véhicule.

Par ailleurs, l'unité extérieure 230 est placée dans le milieu extérieur, par rapport à l'habitacle, de manière à échanger de la chaleur avec un flux d'air extérieur Fe. Afin de permettre le prélèvement de chaleur, l'unité extérieure 230 comprend au moins un échangeur de chaleur extérieur 250, par exemple du type air/fluide réfrigérant, qui est adapté pour fonctionner au moins en tant qu'évaporateur. Selon l'exemple de réalisation illustré, l'échangeur de chaleur extérieur 250 est un échangeur de chaleur réversible 250 adapté pour fonctionner en tant que condenseur ou en tant qu'évaporateur, selon le mode de fonctionnement de la boucle de climatisation 200.

Lorsque le boucle de climatisation 200 fonctionne dans le mode de fonctionnement dit "pompe à chaleur", la température de l'échangeur de chaleur extérieur 250 est susceptible d'être basse de sorte que l'humidité présente dans le flux d'air extérieur Fe est susceptible de se condenser dans l'unité extérieure 230 et de former une couche de givre à la surface de l'échangeur de chaleur extérieur 250.

Au-delà d'un seuil donné, la couche de givre formée à la surface de l'échangeur de chaleur extérieur 250 est susceptible d'affecter fortement les performances de l'échangeur de chaleur extérieur 250 et, par conséquence, le rendement de la boucle de climatisation 200, de sorte qu'il est nécessaire de dégivrer l'unité extérieure 230 et plus particulièrement l'échangeur de chaleur extérieur 250.

A cet effet, la présente invention propose de mettre en oeuvre une canalisation de dégivrage 30. La canalisation de dégivrage 30 permet de raccorder la canalisation d'aspiration 21 ou le compresseur 210 à l'unité extérieure 230. Plus particulièrement, selon l'exemple présenté à à la figure 2, la canalisation de dégivrage 30 permet de raccorder la canalisation d'aspiration 21 à l'échangeur de chaleur extérieur 250.

La canalisation de dégivrage 30 est commandée par un deuxième organe de détente 310. Avantageusement, le deuxième organe de détente 310 est à pression et débit variables et est piloté par l'unité de commande 140. De plus, alternativement ou en complément, le premier organe de détente 310 peut également comporter un moyen de fermeture, permettant d'interdire la circulation de fluide réfrigérant. Préférentiellement, le premier organe de détente 310 est un détendeur, par exemple un détendeur thermostatique ou électronique.

Enfin, la boucle de climatisation 200 comprend également des moyens de détection du givre 31. Préférentiellement, les moyens de détection du givre 31 sont disposés dans l'unité extérieure 230. Les moyens de détection du givre 31 sont raccordés à l'unité de commande 140.

Le mode de fonctionnement dit "pompe à chaleur" de la boucle de climatisation 200 ainsi constituée va dorénavant être décrit.

Tant que la quantité de givre au niveau de l'unité extérieure 230, et notamment au niveau de l'échangeur de chaleur extérieur 250, est inférieure à un seuil prédéterminé, en particulier déterminée par les moyens de détection du givre 31, l'unité de commande 140 maintient la boucle de climatisation 200 dans le mode de fonctionnement dit "pompe à chaleur" maximum.

Dans le mode de fonctionnement dit "pompe à chaleur" maximum, le deuxième organe de détente 310 est fermé et l'unité de commande 140 pilote l'ouverture du premier organe de détente 300 et du compresseur 210 en fonction de la température de consigne pour le chauffage du flux d'air intérieur à distribuer dans l'habitacle.

De manière préférée, le compresseur 210 est du type à débit variable et/ou à cylindrée variable de manière à offrir une grande souplesse de régulation.

Lorsque la quantité de givre au niveau de l'unité extérieure 230 est supérieure au seuil prédéterminé, en particulier déterminée par les moyens de détection du givre 31, l'unité de commande 140 place la boucle de climatisation 200 dans un mode de fonctionnement dit "dégivrage" jusqu'à ce que la couche de givre présente dans l'unité extérieure 230 soit à nouveau inférieur au seuil prédéterminé.

Pendant le mode de fonctionnement dit "dégivrage", l'unité de commande 140 pilote l'ouverture du deuxième organe de détente 310 de manière à alimenter l'unité extérieure 230, en particulier l'échangeur de chaleur extérieur 250, en fluide réfrigérant à une température supérieure à 0°C. Pendant le mode de fonctionnement dit "dégivrage", l'unité de commande 140 maintient également l'ouverture du premier organe de détente 300, de sorte que l'échangeur de chaleur intérieur 220 reste alimenté en fluide réfrigérant chaud en provenance du compresseur 210 et peut continuer à chauffer le flux d'air à distribuer dans l'habitacle.

En pilotant, pendant le mode de fonctionnement dit "dégivrage", le premier organe de détente 300, le deuxième organe de détente 310 et le compresseur 210, l'unité de commande 140 répartit la puissance calorifique disponible entre l'échangeur de chaleur intérieur 220 et l'unité extérieure 230.

Selon l'exemple décrit précédemment, l'unité extérieure 230 comprend uniquement l'échangeur de chaleur extérieur 250. Toutefois, l'unité extérieure 230 peut comprendre plus d'un échangeur de chaleur, notamment de type air/fluide réfrigérant.

Selon la présente invention, le dégivrage de l'unité extérieure 230, en particulier l'échangeur de chaleur extérieur 250, est obtenu par une succession d'ouvertures et de fermetures du deuxième organe de détente 310 dans des proportions telles qu'une quantité suffisante de fluide réfrigérant à température adaptée est envoyé vers l'unité extérieure 230 afin que la couche de givre soit supprimée.

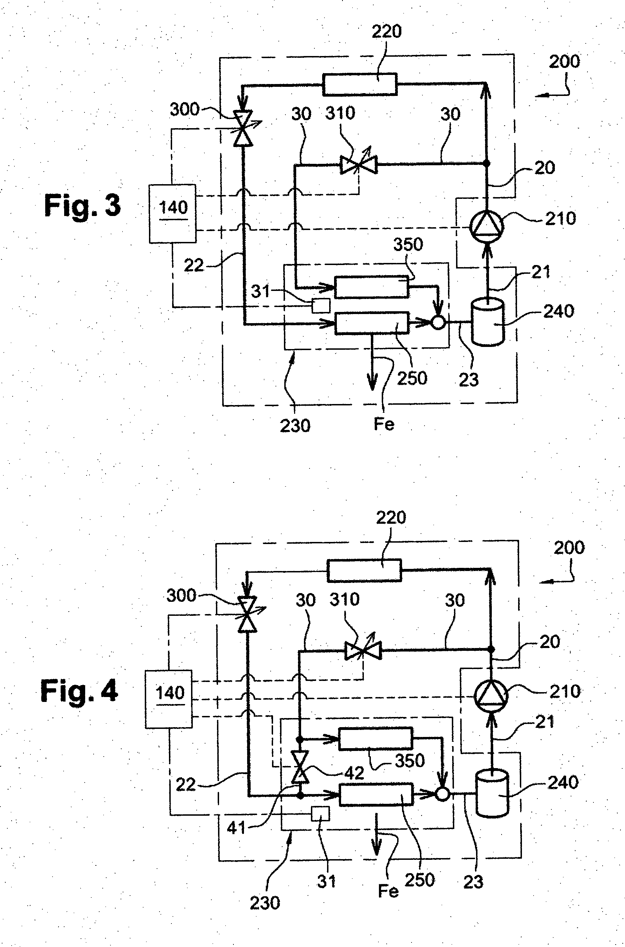

La figure 3 est une vue schématique de principe de la boucle de climatisation 200 selon une deuxième variante de réalisation de la présente invention et illustre une autre forme réalisation de la boucle de climatisation 200, dans laquelle l'unité extérieure 230 comprend, en plus de l'échangeur de chaleur réversible 250, un échangeur de chaleur extérieur complémentaire 350.

Selon l'exemple de réalisation de la figure 3, l'échangeur de chaleur extérieur complémentaire 350 est adapté pour fonctionner uniquement en tant que condenseur. L'échangeur de chaleur extérieur complémentaire 350 est raccordé à la canalisation de dégivrage 30 en aval du deuxième organe de détente 310 et à la deuxième canalisation intermédiaire 23 en aval de l'échangeur de chaleur extérieur 250. Selon cette variante de réalisation, l'échangeur de chaleur extérieur 250 n'est pas raccordé à la canalisation de dégivrage 30.

La boucle de climatisation 200 ainsi constituée fonctionne dans un mode de fonctionnement dit "pompe à chaleur" et dans un mode de fonctionnement dit "dégivrage" tels décrits précédemment.

Il est à noter que l'unité extérieure 230 est adaptée pour que le flux d'air extérieur Fe y circule en traversant l'échangeur de chaleur extérieur complémentaire 350 avant de traverser l'échangeur de chaleur extérieur 250 de manière à être réchauffé par le flux d'air extérieur Fe ayant chauffé par l'échangeur de chaleur extérieur 250 pendant le fonctionnement en mode de fonctionnement dit "dégivrage".

La figure 4 est une vue schématique de principe de la boucle de climatisation 200 selon une troisième variante de réalisation de la présente invention, et illustre une autre forme de réalisation de la boucle de climatisation 200.

Selon la variante de réalisation illustrée à la figure 4, l'unité extérieure 230 comprend également une canalisation de dérivation 41 commandée par une vanne 42, avantageusment pilotée par l'unité de commande 140. Selon la présente invention, la canalisation de dérivation 41 est optionnelle.

De plus, de façon complémentaire, dans la variante de réalisation illustrée à la figure 4, l'échangeur de chaleur extérieur complémentaire 350 peut être réversible adapté pour fonctionner en tant que condenseur ou en tant qu'évaporateur.

Lorsque la boucle de climatisation 200 est agencée en mode de fonctionnement dit "pompe à chaleur", la vanne 42 est ouverte, de sorte que l'échangeur de chaleur extérieur 250 et l'échangeur de chaleur complémentaire 350 sont utilisés en tant qu'évaporateur. Lorsque la boucle de climatisation 200 est agencée en mode de fonctionnement dit "dégivrage", la vanne 42 est fermée, de sorte que l'échangeur de chaleur complémentaire 350 fonctionne en tant que condenseur et l'échangeur de chaleur extérieur 250 fonctionne en tant qu'évaporateur.

Un tel agencement permet d'obtenir un mélange de gaz 'chauds' en provenance de échangeur de chaleur extérieur complémentaire 350 et de gaz 'froids' en provenance de l'échangeur de chaleur extérieur 250 au niveau du point de jonction entre la deuxième canalisation intermédiaire 23 et la canalisation de dégivrage 30.

De plus, selon deux modes de réalisation particuliers, la vanne 42 est susceptible d'être traversée par le fluide réfrigérant depuis la première canalisation intermédiaire 22 vers l'échangeur de chaleur extérieur complémentaire 350, ou depuis la canalisation de dégivrage 30 vers l'échangeur de chaleur extérieur 250.

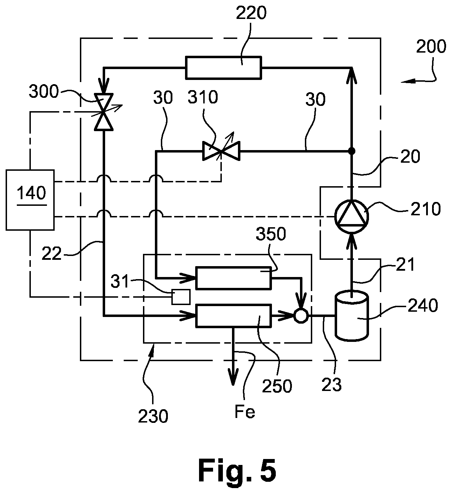

La figure 5 est une vue schématique de principe d'une boucle de climatisation selon une quatrième variante de réalisation de la présente invention et illustre encore une autre forme de réalisation de la boucle de climatisation 200 qui diffère de celle décrite en relation avec la figure 3 en ce que l'échangeur chaleur extérieur 250 est adapté pour fonctionner uniquement en tant qu'évaporateur. La boucle de climatisation 200 ainsi réalisée fonctionne tel que décrit précédemment.

Bien entendu, diverses autres modifications peuvent être apportées à la boucle de climatisation 200 selon l'invention dans le cadre des revendications annexées.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Boucle de climatisation (200), pour une installation de chauffage, ventilation et/ou climatisation, notamment d'un habitacle de véhicule, dans laquelle circule un fluide réfrigérant et apte à fonctionner au moins un mode de fonctionnement dit "pompe à chaleur" afin de chauffer l'habitacle, comprenant au moins :
- un compresseur (210), comportant une sortie de fluide réfrigérant raccordée à une canalisation de refoulement (20) et une entrée de fluide réfrigérant raccordée à une canalisation d'aspiration (21),
- un échangeur de chaleur intérieur (220), apte à fonctionner au moins en tant que condenseur, raccordé au compresseur (210) par la canalisation de refoulement (20), et
- une unité extérieure (230), raccordée au compresseur (210) par la canalisation d'aspiration (21) et comprenant au moins un échangeur de chaleur extérieur (250), apte à fonctionner au moins en tant qu'évaporateur, l'échangeur de chaleur intérieur (220) étant raccordé à l'unité extérieure (230) par une première canalisation intermédiaire (22) comportant au moins un premier organe de détente (300),
**caractérisée en ce que** la boucle climatisation (200) comprend une canalisation de dégivrage (30) raccordée, d'une part, au compresseur (210) et/ou à la canalisation de refoulement (20) et, d'autre part, à l'unité extérieure (230), cette canalisation de dégivrage (30) permettant de maintenir l'alimentation de l'échangeur de chaleur intérieur (220) en fluide réfrigérant pendant le dégivrage de l'unité extérieure (230).

2. Boucle de climatisation (200) selon la revendication 1, **caractérisée en ce que** la canalisation de dégivrage (30) comporte un deuxième organe de détente (310).

3. Boucle de climatisation (200) selon la revendication 1, **caractérisée en ce qu'**elle comprend une unité de commande (140) pilotant le premier organe de détente (300) et/ou le deuxième organe de détente (310), afin de répartir le fluide réfrigérant issu du compresseur (210) entre l'échangeur de chaleur intérieur (220) et l'unité extérieure (230) et/ou à placer l'unité extérieure (230) à une température supérieure à 0°C.

4. Boucle de climatisation selon la revendication 3, **caractérisée en ce qu'**elle comprend des moyens de détection du givre (31), en particulier dans l'unité extérieure (230), raccordés à l'unité de commande (140).

5. Boucle de climatisation selon l'une des revendications précédentes, **caractérisée en ce que** l'échangeur de chaleur extérieur (250) est un échangeur de chaleur réversible, apte à fonctionner en tant qu'évaporateur ou en tant que condenseur.

6. Boucle de climatisation selon l'une des revendications précédentes, **caractérisée en ce que** l'échangeur de chaleur extérieur (250) est raccordé à la canalisation intermédiaire (22) et à la canalisation d'aspiration (21).

7. Boucle de climatisation selon l'une des revendications précédentes, **caractérisée en ce que** l'unité extérieure (230) comprend un échangeur de chaleur extérieur complémentaire (350).

8. Boucle de climatisation selon la revendication 7, **caractérisée en ce que** le échangeur de chaleur extérieur complémentaire (350) est un échangeur de chaleur réversible, apte à fonctionner en tant qu'évaporateur ou en tant que condenseur.

9. Boucle de climatisation selon la revendication 7 ou 8, **caractérisée en ce que** l'échangeur de chaleur extérieur complémentaire (350) est disposé en parallèle avec l'échangeur de chaleur extérieur (250).

10. Boucle de climatisation selon la revendication 7 ou 8, **caractérisée en ce que** l'échangeur de chaleur extérieur complémentaire (350) est raccordé à la canalisation de dégivrage (30) et à la canalisation d'aspiration (21).

11. Boucle de climatisation selon l'une des revendications précédentes, **caractérisée en ce que** l'unité extérieure (230) comprend une canalisation de dérivation (41) raccordant la canalisation de dégivrage (30) et la première canalisation intermédiaire (22).

12. Boucle de climatisation selon la revendication 11, **caractérisée en ce que** la canalisation de dérivation (41) comporte une vanne (42).

13. Boucle de climatisation selon l'une des revendications précédentes, **caractérisé en ce qu'**elle comprend, en aval de l'unité extérieure (230), un accumulateur de fluide réfrigérant raccordé à la canalisation d'aspiration (21).

14. Procédé de commande d'une boucle de climatisation selon l'une des revendications précédentes **caractérisé en ce que** :
- si la quantité de givre présente dans l'unité extérieure (230) est inférieure à un seuil prédéterminé, la boucle de climatisation (200) est agencée pour fonctionner dans un mode de fonctionnement dit "pompe à chaleur", dans lequel le deuxième organe de détente (310) est fermé, et
- si la quantité de givre présente dans l'unité extérieure (230) est supérieure à un seuil prédéterminé, la boucle de climatisation (200) est agencée pour fonctionner dans un mode de fonctionnement dit "dégivrage", dans lequel le premier organe de détente (300) et le deuxième organe de détente (310) sont au moins partiellement ouvert.

## Patentansprüche

1. Klimatisierungskreislauf (200) für eine Heizungs-, Belüftungs- und/oder Klimatisierungsanlage, insbesondere eines Fahrzeuginnenraums, in dem ein Kühlfluid fließt und der mindestens in einer "Wärmepumpe" genannten Betriebsart arbeiten kann, um den Innenraum zu erwärmen, der mindestens enthält:
- einen Kompressor (210), der einen an eine Förderleitung (20) angeschlossenen Kühlfluidausgang und einen an eine Ansaugleitung (21) angeschlossenen Kühlfluideingang aufweist;
- einen inneren Wärmetauscher (220), der zumindest als Kondensator arbeiten kann, angeschlossen an den Kompressor (210) durch die Förderleitung (20), und
- eine äußere Einheit (230), angeschlossen an den Kompressor (210) durch die Ansaugleitung (21) und mindestens einen äußeren Wärmetauscher (250) enthaltend, der zumindest als Verdampfer arbeiten kann, wobei der innere Wärmetauscher (220) an die äußere Einheit (230) durch eine erste Zwischenleitung (22) angeschlossen ist, die mindestens ein erstes Expansionsorgan (300) aufweist,
**dadurch gekennzeichnet, dass** der Klimatisierungskreislauf (200) eine Enteisungsleitung (30) enthält, die einerseits an den Kompressor (210) und/oder an die Förderleitung (20) und andererseits an die äußere Einheit (230) angeschlossen ist, wobei diese Enteisungsleitung (30) es ermöglicht, die Versorgung des inneren Wärmetauschers (220) mit Kühlfluid während der Enteisung der äußeren Einheit (230) aufrechtzuerhalten.

2. Klimatisierungskreislauf (200) nach Anspruch 1, **dadurch gekennzeichnet, dass** die Enteisungsleitung (30) ein zweites Expansionsorgan (310) aufweist.

3. Klimatisierungskreislauf (200) nach Anspruch 1, **dadurch gekennzeichnet, dass** er eine Steuereinheit (140) aufweist, die das erste Expansionsorgan (300) und/oder das zweite Expansionsorgan (310) steuert, um das vom Kompressor (210) stammende Kühlfluid zwischen dem inneren Wärmetauscher (220) und der äußeren Einheit (230) zu verteilen und/oder die äußere Einheit (230) auf eine Temperatur höher als 0°C zu setzen.

4. Klimatisierungskreislauf nach Anspruch 3, **dadurch gekennzeichnet, dass** er Einrichtungen zur Erfassung des Eises (31), insbesondere in der äußeren Einheit (230), enthält, die an die Steuereinheit (140) angeschlossen sind.

5. Klimatisierungskreislauf nach einem der vorhergehenden Ansprüche, **dadurch gekennzeichnet, dass** der äußere Wärmetauscher (250) ein umkehrbarer Wärmetauscher ist, der als Verdampfer oder als Kondensator arbeiten kann.

6. Klimatisierungskreislauf nach einem der vorhergehenden Ansprüche, **dadurch gekennzeichnet, dass** der äußere Wärmetauscher (250) an die Zwischenleitung (22) und an die Ansaugleitung (21) angeschlossen ist.

7. Klimatisierungskreislauf nach einem der vorhergehenden Ansprüche, **dadurch gekennzeichnet, dass** die äußere Einheit (230) einen komplementären äußeren Wärmetauscher (350) enthält.

8. Klimatisierungskreislauf nach Anspruch 7, **dadurch gekennzeichnet, dass** der komplementäre äußere Wärmetauscher (350) ein umkehrbarer Wärmetauscher ist, der als Verdampfer oder als Kondensator arbeiten kann.

9. Klimatisierungskreislauf nach Anspruch 7 oder 8, **dadurch gekennzeichnet, dass** der komplementäre äußere Wärmetauscher (350) mit dem äußeren Wärmetauscher (250) parallelgeschaltet ist.

10. Klimatisierungskreislauf nach Anspruch 7 oder 8, **dadurch gekennzeichnet, dass** der komplementäre äußere Wärmetauscher (350) an die Enteisungsleitung (30) und an die Ansaugleitung (21) angeschlossen ist.

11. Klimatisierungskreislauf nach einem der vorhergehenden Ansprüche, **dadurch gekennzeichnet, dass** die äußere Einheit (230) eine Abzweigleitung (41) enthält, die die Enteisungsleitung (30) und die erste Zwischenleitung (22) verbindet.

12. Klimatisierungskreislauf nach Anspruch 11, **dadurch gekennzeichnet, dass** die Abzweigleitung (41) ein Ventil (42) aufweist.

13. Klimatisierungskreislauf nach einem der vorhergehenden Ansprüche, **dadurch gekennzeichnet, dass** er stromabwärts hinter der äußeren Einheit (230) einen Kühlfluidspeicher enthält, der an die Ansaugleitung (21) angeschlossen ist.

14. Verfahren zur Steuerung eines Klimatisierungskreislaufs nach einem der vorhergehenden Ansprüche, **dadurch gekennzeichnet, dass**:
- wenn die in der äußeren Einheit (230) vorhandene Eismenge geringer als eine vorbestimmte Schwelle ist, der Klimatisierungskreislauf (200) eingerichtet ist, um in einer "Wärmepumpe" genannten Betriebsart zu arbeiten, in der das zweite Expansionsorgan (310) geschlossen ist, und
- wenn die in der äußeren Einheit (230) vorhandene Eismenge größer als eine vorbestimmte Schwelle ist, der Klimatisierungskreislauf (200) eingerichtet ist, um in einer "Enteisung" genannten Betriebsart zu arbeiten, in der das erste Expansionsorgan (300) und das zweite Expansionsorgan (310) zumindest teilweise offen sind.

## Claims

1. Air conditioning loop (200) for a heating, ventilation and/or air conditioning installation, notably for a vehicle interior, in which there circulates a refrigerant and which is able to operate at least one mode of operation referred to as "heat pump" mode in order to heat the interior, comprising at least:
- a compressor (210), comprising a refrigerant outlet connected to a delivery pipe (20) and a refrigerant inlet connected to an intake pipe (21),
- an interior heat exchanger (220), able to operate at least as a condenser, connected to the compressor (210) by the delivery pipe (20), and
- an exterior unit (230), connected to the compressor (210) by the intake pipe (21) and comprising at least one exterior heat exchanger (250) able to operate at least as an evaporator, the interior heat exchanger (220) being connected to the exterior unit (230) by a first intermediate pipe (22) comprising at least a first expansion member (300),
**characterized in that** the air conditioning loop (200) comprises a defrosting pipe (30) connected, on the one hand, to the compressor (210) and/or to the delivery pipe (20) and, on the other hand, to the exterior unit (230), this defrosting pipe (30) allowing the interior heat exchanger (220) to be kept supplied with the refrigerant during the deicing of the exterior unit (230).

2. Air conditioning loop (200) according to Claim 1, **characterized in that** the defrosting pipe (30) comprises a second expansion member (310).

3. Air conditioning loop (200) according to Claim 1, **characterized in that** it comprises a control unit (140) controlling the first expansion member (300) and/or the second expansion member (310) so as to distribute the refrigerant coming from the compressor (210) between the interior heat exchanger (220) and the exterior unit (230) and/or so as to place the exterior unit (230) at a temperature above 0°C.

4. Air conditioning loop according to Claim 3, **characterized in that** it comprises frost detection means (31), particularly in the exterior unit (230), which are connected to the control unit (140).

5. Air conditioning loop according to one of the preceding claims, **characterized in that** the exterior heat exchanger (250) is a reversible heat exchanger able to operate as an evaporator or as a condenser.

6. Air conditioning loop according to one of the preceding claims, **characterized in that** the exterior heat exchanger (250) is connected to the intermediate pipe (22) and to the intake pipe (21).

7. Air conditioning loop according to one of the preceding claims, **characterized in that** the exterior unit (230) comprises an additional exterior heat exchanger (350).

8. Air conditioning loop according to Claim 7, **characterized in that** the additional exterior heat exchanger (350) is a reversible heat exchanger able to operate as an evaporator or as a condenser.

9. Air conditioning loop according to Claim 7 or 8, **characterized in that** the additional exterior heat exchanger (350) is arranged in parallel with the exterior heat exchanger (250).

10. Air conditioning loop according to Claim 7 or 8, **characterized in that** the additional exterior heat exchanger (350) is connected to the defrosting pipe (30) and to the intake pipe (21).

11. Air conditioning loop according to one of the preceding claims, **characterized in that** the exterior unit (230) comprises a bypass pipe (41) connecting the defrosting pipe (30) and the first intermediate pipe (22).

12. Air conditioning loop according to Claim 11, **characterized in that** the bypass pipe (41) comprises a valve (42).

13. Air conditioning loop according to one of the preceding claims, **characterized in that** it comprises, downstream of the exterior unit (230), a refrigerant accumulator connected to the intake pipe (21).

14. Method for controlling an air conditioning loop according to one of the preceding claims, **characterized in that**:
- if the amount of frost present in the exterior unit (230) is below a predetermined threshold, the air conditioning loop (200) is designed to operate in a mode of operation referred to as "heat pump" mode, in which the second expansion member (310) is closed, and
- if the amount of frost present in the exterior unit (230) is above a predetermined threshold, the air conditioning loop (200) is designed to operate in a mode of operation known as "defrost" mode in which the first expansion member (300) and the second expansion member (310) are at least partially open.
